# EUROPEAN PATENT APPLICATION

(11) **EP 2 660 469 A1**
(43) Date of publication of application: **06.11.2013**
(21) Application number: 11852404.0
(22) Date of filing: 26.12.2011
(51) Int. Cl.: F04B 27/08, F04B 39/10, F16K 15/02

(54) **CHECK VALVE AND VARIABLE CAPACITY COMPRESSOR USING SAME**

(30) Priority: 28.12.2010 JP 2010291846
(71) Applicant: Valeo Japan Co., Ltd., Saitama 360-0193 (JP)
(72) Inventor: UNE, Katsutaka, Kumagaya-shi Saitama 360-0193 (JP)
(74) Representative: Delplanque, Arnaud
(86) International application number: PCT/JP2011/007247
(87) International publication number: WO 2012/090466

(57) **Abstract**

Provided is a check valve with a gas passage formed in the inside of a casing thereof, wherein chattering and hunching attributed to the disturbance of the behavior of a valve element can be suppressed by attenuating the rapid movement of the valve element.

In a check valve 50 where a valve close pressure is set smaller than a valve open pressure, the check valve 50 includes: a bottomed cylindrical casing 51 having a bottom portion 51a in which a valve hole 58 is formed; a valve element 52 which is movable in the inside of the casing 51 along the depth direction of the casing 51 and opens or closes the valve hole 58; a spring 53 which biases the valve element 52 toward the bottom portion 52a; and a stopper 54 which restricts the movement of the valve element 52 and has a communication portion 54c formed therein, wherein a gas passage 65 is formed between the valve element 52 and an inner peripheral surface of the casing 51 from the valve hole 58 to the communication portion 54c, and a damper chamber 55 is formed between the valve element 52 and the stopper 54 by a partition member 56 which is slidably fitted in the valve element 52.

## Description

### [Technical Field]

The present invention relates to a check valve which is provided to a discharge passage of a compressor and a variable capacity compressor which uses the check valve.

### [Background Art]

In a clutchless compressor having no clutch which is used in an air conditioner for a vehicle (hereinafter referred to as air conditioner), power from an engine is always transmitted to the compressor. Accordingly, even when the air conditioner is in a stop state, the clutchless compressor continues the rotation along with the rotation of the engine and continues a compression operation with a slight discharge capacity. Accordingly, when a refrigerant compressed by the slight discharge capacity is supplied to an external cycle with the air conditioner in a stop state, there arises a drawback that an evaporator is frozen.

Accordingly, in the clutchless compressor, a check valve having a predetermined valve open pressure is provided in a discharge passage of the compressor, and a circulation path is formed in the inside of the compressor when the air conditioner is in a stop state (for example, in the case of an inlet control, a pressure control valve arranged in a supply passage is opened) thus circulating a refrigerant gas internally.

A check valve used in general which is arranged in a discharge passage includes: a valve element; a casing which slidably holds the valve element in the axial direction and has a valve hole which is opened or closed by the valve element formed in a bottom portion thereof; and a spring which pushes the valve element to the bottom portion in a biasing manner with a predetermined load. When a valve open pressure of the valve element is set to a small value, the check valve is opened at the high speed rotation before the sufficient internal circulation of a refrigerant gas is attained thus giving rise to a drawback that a refrigerant flows out to an external circle. To the contrary, when the valve open pressure of the valve element is set to a large value, the pressure difference between a pressure in front of the check valve and a pressure behind the check valve is small at the low speed rotation (at the low flow rate) during the operation of the air conditioner thus giving rise to a drawback that the check valve is closed by a spring force. During such an operation of the air conditioner, a supply passage is not opened so that a pressure is accumulated in a discharge chamber. When the accumulated pressure exceeds a valve open pressure, the check valve is opened, then an internal pressure is released at a stretch so that the check valve is again closed. Such open/close operations are repeated so that so-called chattering occurs. Accordingly, the extremely large discharging pulsation is generated thus giving rise to drawbacks such as the generation of uncomfortable pulsation sounds and the lowering of reliability of discharge piping.

In view of the above, the applicant of this application previously proposed a compressor where, to suppress the above-mentioned chattering which occurs at the low flow rate in the operation of the air conditioner, a check valve in which a valve close pressure is set smaller than a valve open pressure is arranged in a discharge passage of the compressor so as to make the closing of the check valve which is opened once difficult thus preventing the occurrence of chattering (see WO02/061280 A1).

The check valve used in such a compressor includes: a bottomed cylindrical casing; a valve element which slides in the inside of the casing along the depth direction of the casing; and a spring which biases the valve element toward a bottom portion of the casing, wherein the casing includes: a seat surface formed on a bottom portion thereof; a valve hole formed at the center of the seat surface; an overlapping portion which is formed on the bottom portion contiguously and is fitted on a distal end portion of the valve element by a predetermined length in the depth direction; and a cylindrical portion which is formed on the overlapping portion contiguously and guides the valve element in the depth direction, and a gas passage which is opened or closed by the valve element is formed in the inside of the casing.

Due to such a constitution, even when the compressor is rotated at a high speed with the air conditioner in a stop state, by setting a valve open pressure so high that the check valve is not opened, the internal circulation of a refrigerant gas is secured so that the sufficient lubrication and cooling of sliding portions in the compressor can be attained. Further, since the valve close pressure is set lower than the valve open pressure, even at the lower flow rate in the operation of the air conditioner, it is possible to make the closing of the check valve which is opened once difficult and hence, it is expected that the occurrence of chattering where the valve element repeats opening and closing thereof can be suppressed.

However, in such a constitution, it is confirmed that once an operation of the valve element is disturbed due to pressure pulsation or sudden pressure change upstream of the check valve, there exists a possibility that chattering or hunching is induced triggered by the disturbance of the operation of the valve element.

As a technique for suppressing the disturbance of behavior of the valve element due to such a pressure change, for example, as disclosed in the Japanese patent application JP-A-2000-346241, there has been known the following constitution. That is, a check valve which prevents a backflow of a refrigerant gas is mounted in an accommodation chamber which is arranged adjacent to a discharge chamber and is communicated with a discharge passage. The check valve is constituted of: a valve seat member; a casing which is fitted on the valve seat member; a valve element which is slidably provided in the casing in the axial direction; and a spring which biases the valve element to the valve seat member in the inside of the casing. A flow passage which is communicated with the discharge chamber is formed in the valve seat member in a penetrating manner. A seat surface is formed around a flow passage port of the flow passage. A communication port which is communicated with the discharge passage opens in a peripheral wall of the casing. A seal surface which is seated on the seat surface and an outer peripheral surface perpendicular to the seal surface are formed on the valve element. A damper chamber capable of absorbing vibrations of the valve element is formed on a back surface of the valve element.

Due to such a constitution, even when a sudden pressure change occurs, the rapid movement of the valve element can be attenuated by the damper chamber formed on the back surface of the valve element and hence, chattering and hunching attributed to the disturbance of the behavior of the valve element can be suppressed.

### [Summary of Invention]

### [Technical Problem]

However, in the above-mentioned constitution, it is arranged so that when the valve element moves away from the seat surface, a refrigerant gas flows out to the periphery of the casing through the communication port formed in the peripheral surface of the casing and, thereafter, flows out from the discharge passage. Accordingly, it is necessary to ensure a flow passage for a refrigerant gas on the periphery of the casing thus giving rise to a drawback that a place where the check valve is installed cannot be formed in a compact manner.
Accordingly, it is impossible to directly adopt the constitution shown in the Japanese patent application JP-A-2000-346241 where a refrigerant gas is flown out to the periphery of the casing to the check valve disclosed in the international patent application WO02/061280 A1 where the gas passage is formed in the inside of the casing.

The present invention has been made in view of the above-mentioned circumstances, and it is a primary object of the present invention to provide a check valve with a gas passage formed in the inside of a casing thereof, wherein chattering and hunching attributed to the disturbance of the behavior of a valve element can be suppressed by attenuating the rapid movement of the valve element, and to provide a variable capacity compressor which uses such a check valve.

To achieve the above-mentioned object, the present invention provides a check valve which is provided to a discharge passage through which a working fluid discharged into a discharge chamber of a compressor is delivered to the outside of the compressor, and has a valve close pressure thereof set smaller than a valve open pressure thereof, wherein the check valve includes: a bottomed cylindrical casing having a bottom portion in which a valve hole is formed; a valve element which is movable in the inside of the casing along the depth direction of the casing and opens or closes the valve hole; a spring which biases the valve element toward the bottom portion; and a stopper which restricts the movement of the valve element and has a communication portion formed therein, wherein a gas passage is formed between the valve element and an inner peripheral surface of the casing from the valve hole to the communication portion, and a damper chamber is formed between the valve element and the stopper by a partition member which is slidably fitted in the valve element.

Accordingly, in the constitution where the gas passage is formed in the inside of the casing between the valve element and the inner peripheral surface of the casing from the valve hole which is formed in the bottom portion of the casing to the communication portion which is formed in the stopper, the damper chamber is formed between the valve element and the stopper in the inside of the casing by the partition member which is slidably fitted in the valve element and hence, the rapid movement of the valve element can be attenuated by the damper chamber.

By adopting the constitution where the spring is housed in the damper chamber, it is unnecessary to arrange the spring in the gas passage in the inside of the casing and hence, the increase of passage resistance attributed to the spring can be suppressed.

The partition member may be formed of a cylindrical member which is integrally formed with the stopper, or may be formed of a bottomed cylindrical member formed as a body separate from the stopper.
By adopting the former constitution, the partition member can be formed integrally with the stopper at the process of forming the stopper and hence, the increase of the number of parts can be suppressed and the assembling of the stopper into the casing can be performed easily.
By adopting the latter constitution, the centering of the valve element with the stopper is unnecessary and hence, even when the valve element is slightly inclined, such a deviation can be absorbed.

To explain more specific constitution, the valve element may include: a valve head portion which opens or closes the valve hole; a shell portion which is formed contiguously with the valve head portion and has a recessed portion formed on a back surface thereof; and guide blade portions which are formed on an outer peripheral surface of the shell portion in a projecting manner and are brought into slide contact with the inner peripheral surface of the casing, wherein an opening side of the partition member (cylindrical member) may be slidably fitted in the recessed portion formed on the shell portion thus forming the damper chamber.

Alternatively, the valve element may include: a valve head portion which opens or closes the valve hole; and a shell portion which is formed contiguously with the valve head portion and has a recessed portion formed on a back surface thereof; wherein an opening side of the partition member (cylindrical member) may be slidably fitted on the shell portion such that the opening side covers the recessed portion thus forming the damper chamber. In such a constitution, the guide blade portions are unnecessary and hence, it is possible to ensure a large gas passage between the valve element and the inner peripheral surface of the casing and it is also possible to prevent the increase of passage resistance.

Although the damper chamber may be communicated with the gas passage through an orifice hole formed in the cylindrical member which constitutes the partition member, the stopper or the valve element, the damper chamber may be communicated with the gas passage through a clearance formed in a slide contact portion formed between the valve element and the partition member (cylindrical member) which is slidably fitted in the valve element.

The check valve which has a valve close pressure thereof set smaller than a valve open pressure thereof may include: a bottomed cylindrical casing which has a seat surface formed on a bottom portion thereof and has a valve hole formed in the seat surface; a valve element which is slidably held on the casing and closes the valve hole by being brought into contact with the seat surface; and a spring which biases the valve element to the seat surface, wherein the casing may include an overlapping portion which is formed contiguously with the bottom portion and is fitted on a distal end portion of the valve element by a predetermined length in the axial direction.

A variable capacity compressor provided with the above-mentioned check valve may be a swash-type variable capacity compressor which includes: a shaft which passes through a crank chamber and is rotatably supported in a housing; a swash plate which is rotatable in synchronism with the rotation of the shaft and is mounted on the shaft in an inclinable manner with respect to the shaft; a piston which is engaged with a periphery of the swash plate and is slidable in a reciprocating manner in the inside of a cylinder bore formed in the housing along with the rotation of the swash plate; and a suction chamber and a discharge chamber which are selectively communicated with the cylinder bore by the reciprocating slide movement of the piston, wherein a discharge capacity is variably controlled by changing an inclination angle of the swash plate. The variable capacity compressor provided with the check valve may be a compressor of other types.

### [Advantageous Effects of Invention]

As has been explained heretofore, according to the present invention, the check valve which is provided to the discharge passage, and has a valve close pressure thereof set smaller than a valve open pressure thereof includes: the bottomed cylindrical casing having the bottom portion in which the valve hole is formed; the valve element which is movable in the inside of the casing along the depth direction of the casing and opens or closes the valve hole; the spring which biases the valve element toward the bottom portion; and the stopper which restricts the movement of the valve element and has the communication portion formed therein, wherein the gas passage is formed between the valve element and the inner peripheral surface of the casing from the valve hole to the communication portion, and the damper chamber is formed between the valve element and the stopper by the partition member which is slidably fitted in the valve element. Accordingly, in the check valve where the gas passage is formed between the valve element and the inner peripheral surface of the casing, the rapid movement of the valve element can be attenuated by the damper chamber and hence, the chattering and hunching attributed to the disturbance of the behavior of the valve element can be suppressed.

In the above-mentioned check valve, by adopting the constitution where the spring is housed in the damper chamber, it is unnecessary to arrange the spring in the gas passage in the inside of the casing and hence, the increase of passage resistance attributed to the spring can be suppressed.
By adopting the constitution where the partition member is formed of a cylindrical member which is integrally formed with the stopper, the increase of the number of parts can be suppressed and the assembling of the stopper into the casing can be performed easily.
By adopting the constitution where the partition member is formed of the bottomed cylindrical member formed as a body separate from the stopper, the centering of the valve element with the stopper becomes unnecessary and hence, even when the valve element is slightly inclined, such a deviation can be absorbed.

### [Brief Description of Drawings]

- Fig. 1 is a cross-sectional view showing an operation state of a variable capacity clutchless compressor according to an embodiment of the present invention when a piston stroke of the compressor is large.
- Fig. 2 is a cross-sectional view showing an operation state of the variable capacity clutchless compressor according to the embodiment of the present invention when the piston stroke of the compressor is small.
- Fig. 3(a) and Fig. 3(b) are cross-sectional views showing a first embodiment of a check valve of the variable capacity clutchless compressor shown in Fig. 1, wherein Fig. 3(a) shows a state where a valve element is in a fully closed state, and Fig. 3(b) shows a state where the valve element is in a fully open state
- Fig. 4 is an exploded perspective view of the check valve shown in Fig. 3.
- Fig. 5(a) and Fig. 5(b) are cross-sectional views showing a second embodiment of the check valve of the variable capacity clutchless compressor shown in Fig. 1, wherein Fig. 5(a) shows a state where a valve element is in a fully closed state, and Fig. 5(b) shows a state where the valve element is in a fully open state.
- Fig. 6 is an exploded perspective view of the check valve shown in Fig. 5.
- Fig. 7(a) and Fig. 7(b) are cross-sectional views showing a third embodiment of the check valve of the variable capacity clutchless compressor shown in Fig. 1, wherein Fig. 7(a) shows a state where a valve element is in a fully closed state, and Fig. 7(b) shows a state where the check valve is in a fully open state.
- Fig. 8 is an exploded perspective view of the check valve shown in Fig. 7.

### [Description of Embodiments]

Hereinafter, the best mode of the present invention is explained in conjunction with attached drawings.

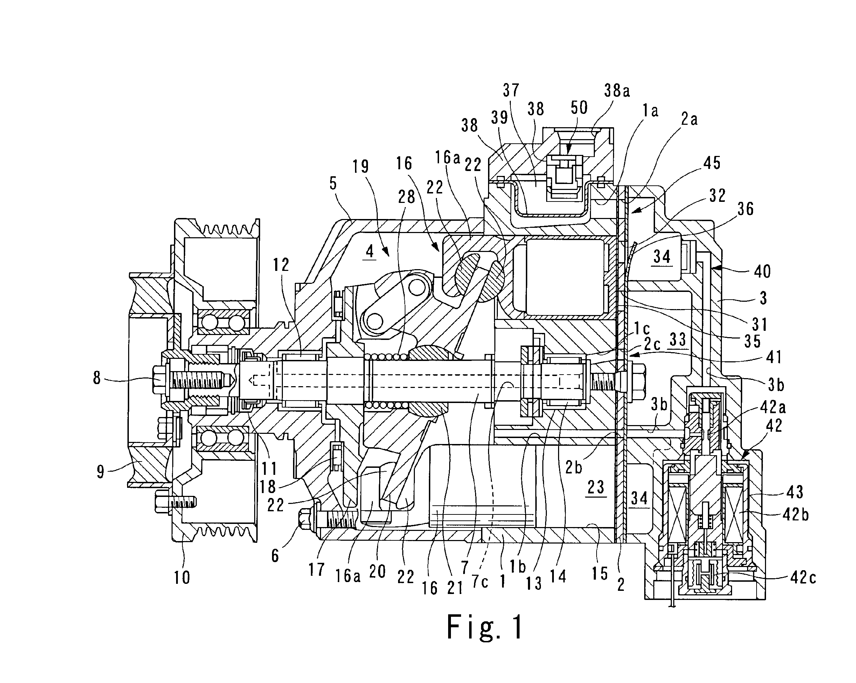

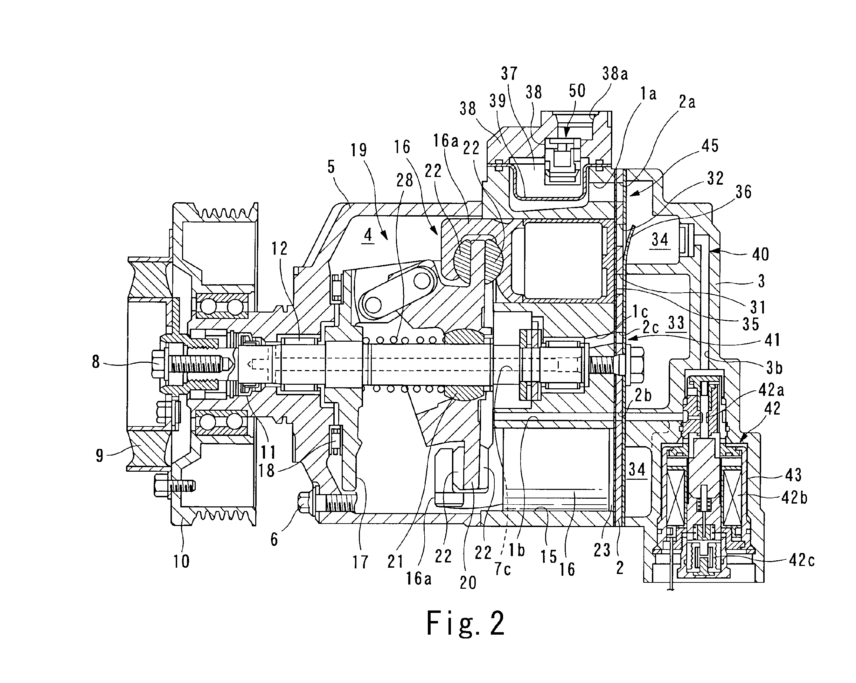

In Fig. 1 and Fig. 2, a swash-plate-type compressor is shown as one example of a variable capacity clutchless compressor. The compressor is constituted of: a cylinder block 1; a rear head 3 which is assembled to a rear side (a right side in the drawing) of the cylinder block 1 through the intermediary of a valve plate 2; and a front head 5 which is assembled to the cylinder block 1 in a state where the front head 5 closes a front side (a left side in the drawing) of the cylinder block 1 thus defining a crank chamber 4. The front head 5, the cylinder block 1, the valve plate 2 and the rear head 3 are fastened to each other by fastening bolts 6 in the axial direction thus constituting a housing of the compressor.

A drive shaft 7 which has one end thereof projecting from the front head 5 passes through the crank chamber 4 which is defined by the front head 5 and the cylinder block 1. A drive pulley 10 which is rotatably fitted on a boss portion 5a of the front head 5 by way of a connecting member 9 mounted on the front head 5 in the axial direction using a bolt 8 is connected to a portion of the drive shaft 7 projecting from the front head 5. A rotational force is transmitted to the drive pulley 10 from an engine of a vehicle by way of a drive belt not shown in the drawing. On one end side of the drive shaft 7, a gap formed between the drive shaft 7 and the front head 5 is hermetically sealed by means of a seal member 11 provided between the drive shaft 7 and the front head 5. One end side of the drive shaft 7 is rotatably supported by a radial bearing 12. The other end side of the drive shaft 7 is rotatably supported by a radial bearing 14 which is accommodated in a recessed portion 13 formed in the cylinder block 1.

In the cylinder block 1, the recessed portion 13 in which the radial bearing 14 is accommodated, and a plurality of cylinder bores 15 which are arranged equidistantly on the circumference about the recessed portion 13 are formed. A hollow single head piston 16 is slidably inserted into each cylinder bore 15 in a reciprocating manner.

A thrust flange 17 which is integrally rotatable with the drive shaft 7 is fixedly mounted on the drive shaft 7 in the crank chamber 4. The thrust flange 17 is rotatably supported on an inner surface of the front head 5 by way of a thrust bearing 18, and a swash plate 20 is connected to the thrust flange 17 by way of a link member 19.

The swash plate 20 is provided in an inclinable manner with respect to a hinge ball 21 which is slidably mounted on the drive shaft 7, and the swash plate 20 is rotated integrally with the thrust flange 17 by way of the link member 19 in synchronism with the rotation of the thrust flange 17. An engaging portion 16a of each single head piston 16 is engaged with a peripheral portion of the swash plate 20 by way of a pair of shoes 22.

Accordingly, when the drive shaft 7 is rotated, the swash plate 20 is rotated along with the rotation of the drive shaft 7. This rotational movement of the swash plate 20 is converted into the reciprocating linear movement of the single head piston 16 by way of the shoes 22 so that the capacity of a compression chamber 23 formed between the single head piston 16 and the valve plate 2 in the inside of the cylinder bore 15 is changed.

A suction hole 31 and a discharge hole 32 are formed in the valve plate 2 corresponding to each cylinder bore 15. A suction chamber 33 which stores a working fluid to be supplied to the compression chamber 23 and a discharge chamber 34 which stores a working fluid to be discharged from the compression chamber 23 are defined in the rear head 3. The suction chamber 33 is formed in a center portion of the rear head 3, is communicated with a suction port not shown in the drawing which is communicated with an outlet side of an evaporator, and is communicable with the compression chambers 23 through the suction holes 31 formed in the valve plate 2 which are opened or closed by suction valves 35. Further, the discharge chamber 34 is formed around the suction chamber 33, is communicable with the compression chambers 23 through the discharge holes 32 formed in the valve plate 2 which are opened or closed by discharge valves 36, and is communicated with a discharge space 37 which is formed in a peripheral portion of the cylinder block 1 through passages 2a, 1 a formed in the valve plate 2 and the cylinder block 1 respectively. The discharge space 37 is closed by a cover 38 which is mounted on the cylinder block 1, and a discharge port 38a and a valve housing hole 38b are formed in the cover 38. A baffle plate 39 which attenuates the discharge pulsation is housed in the discharge space 37. A discharge passage 45 through which a refrigerant gas discharged into the discharge chamber 34 from the compression chamber 23 is delivered to the outside of the compressor is constituted of: the passages 1a, 2a; the discharge space 37; the valve housing hole 38b; and the discharge port 38a described above.

A discharge capacity of the compressor is determined by a stroke of the piston 16, and the stroke is determined by an inclination angle of the swash plate 20 with respect to a plane perpendicular to the drive shaft 7. That is, the inclination of the swash plate 20 is set to an angle where the differential pressure between a pressure applied to a front surface of the piston 16, that is, a pressure in the compression chamber 23 (pressure in the cylinder bore) and a pressure applied to a back surface of the piston 16, that is, a pressure in the crank chamber 4 (crank chamber pressure) and a biasing force of a destroke spring 28 which biases the hinge ball 21 in the direction that a piston stroke is made small are balanced with each other. A piston stroke is determined due to such setting of the inclination of the swash plate 20 and thereby discharge capacity is determined.

Due to such a constitution, when a pressure in the crank chamber 4 is lowered, the differential pressure between the pressure in the compression chamber 23 and the pressure in the crank chamber 4 is increased and hence, a moment acts on the swash plate 20 in the direction that an inclination angle of the swash plate 20 is increased. Accordingly, as shown in Fig. 1, when the inclination angle of the swash plate 20 is increased, the hinge ball 21 moves toward a thrust flange side against a biasing force from the destroke spring 28 and hence, a stroke amount of the piston 16 is increased and thereby a discharge capacity is increased. To the contrary, when the pressure in the crank chamber 4 is increased, the differential pressure between the pressure in the compression chamber 23 and the pressure in the crank chamber 4 is decreased and hence, a moment acts on the swash plate 20 in the direction that an inclination angle of the swash plate 20 is decreased. Accordingly, as shown in Fig. 2, when an inclination angle of the swash plate 20 is decreased, the hinge ball 21 moves in the direction that the hinge ball 21 moves away from the thrust flange 17 and hence, a stroke amount of the piston 16 is decreased and thereby a discharge capacity is decreased.

In this constructive example, a supply passage 40 which makes the discharge chamber 34 and the crank chamber 4 communicate with each other is formed by passages 1b, 2b and 3b which are formed in and along the cylinder block 1, the valve plate 2 and the rear head 3, while a release passage 41 which makes the crank chamber 4 and the suction chamber 33 communicate with each other through passages 1c, 2c which are formed in the cylinder block 1 and the valve plate 2 respectively, a passage 7c which is formed in the shaft 7, a gap formed in the radial bearing 14 and the like is formed. Further, a pressure control valve 42 is disposed on the supply passage 40, and a pressure in the crank chamber 4 is controlled by adjusting a flow rate of a refrigerant which flows into the crank chamber 4 from the discharge chamber 34 using the pressure control valve 42.

The pressure control valve 42 is inserted into a mounting hole 43 formed in the rear head 3, and comprises a valve portion 42a, a solenoid 42b and a bellows 42c. The bellows 42c extends when a suction pressure is lowered, and moves the valve portion 42a in the direction that the supply passage 40 is opened. The solenoid 42b biases the valve portion 42a in the direction that the supply passage 40 is closed when an electric current supplied from a control unit not shown in the drawing is increased. The pressure control valve 42 performs a control where the degree of opening or an open time of the supply passage 40 is adjusted by adjusting an amount of electricity supplied from the outside so that a pressure in the crank chamber is controlled so as to make a suction pressure assume a target value, and the supply passage 40 is fully opened by stopping the supply of electricity (off) so that a pressure in the crank chamber is increased and thereby a discharge capacity is minimized.

Accordingly, in a state where the supply of electricity is stopped, in the compressor, an internal circulation path is formed by the compression chamber 23, the discharge hole 32, the discharge chamber 34, the supply passage 40, the crank chamber 4, the release passage 41 and the suction chamber 33. Due to such an internal circulation path, a refrigerant gas is circulated in the inside of the compressor when the inclination angle of the swash plate 20 is minimum or almost minimum thus lubricating and cooling sliding portions in the inside of the compressor.

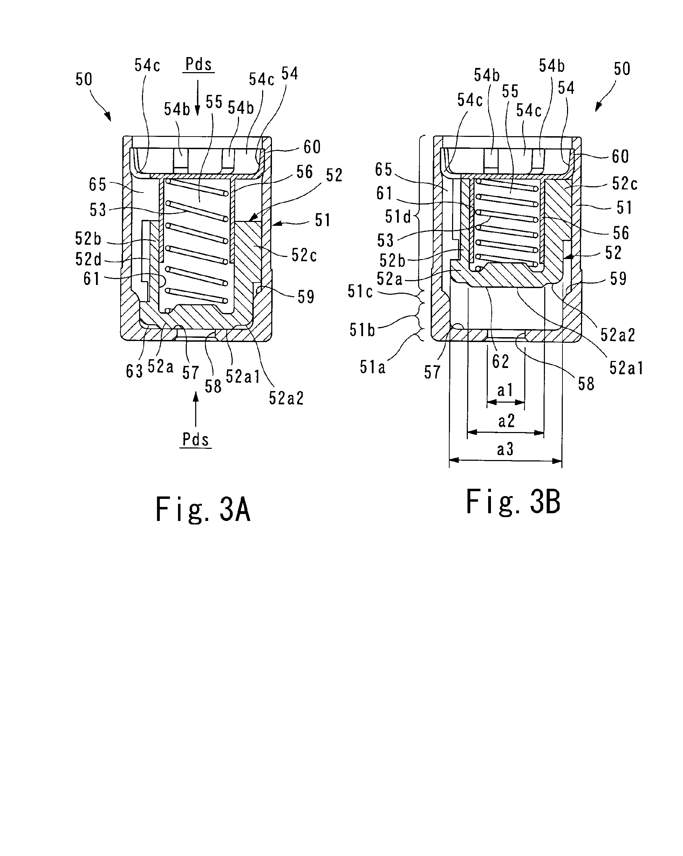

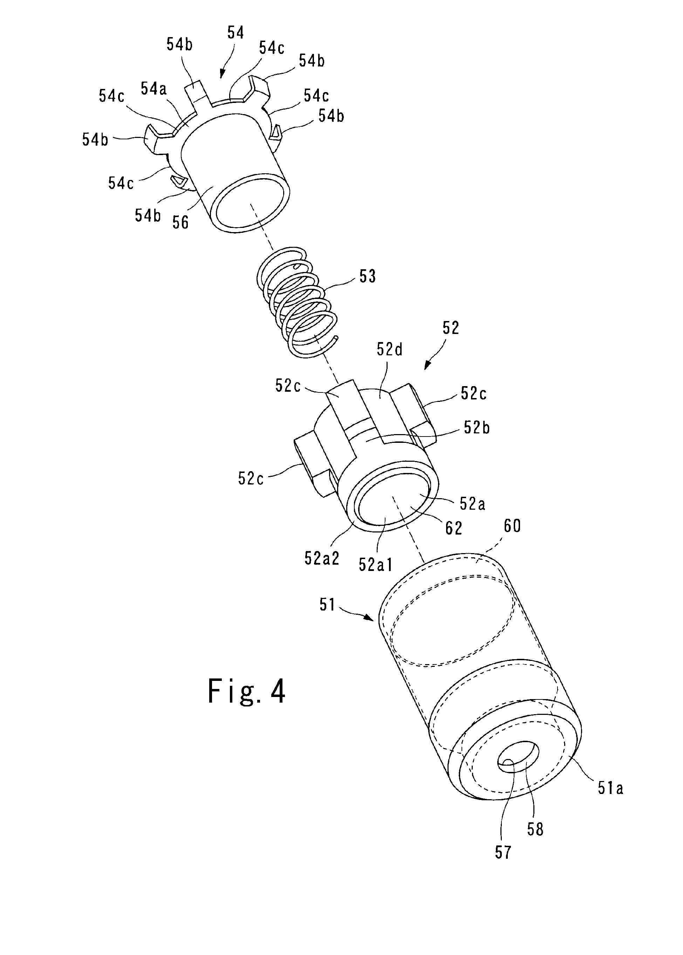

A check valve 50 is housed in the valve housing hole 38b of the discharge passage 45. As shown in Fig. 3 and Fig. 4, the check valve 50 is constituted of: a bottomed cylindrical casing 51; a valve element 52 which is housed in the casing; a coil-shaped spring 53 which biases the valve element 52; a stopper 54 which restricts the movement of the valve element; and a partition member 56 which is slidably fitted in the valve element 52 and constitutes a damper chamber 55 together with the valve element 52 (first embodiment).

The casing 51 is constituted of a bottom portion 51 a; an overlapping portion 51 b which is formed contiguously with the bottom portion 51 a, a guide portion 51 c which is formed contiguously with the overlapping portion 51b; and a cylindrical portion 51d which is contiguously extended from the guide portion 51c. The bottom portion 51a includes: a seat surface 57 with which a distal end portion of the valve element is brought into contact, and a valve hole 58 which is formed in a center portion of the seat surface 57. The overlapping portion 51b is provided on the bottom portion 51a in an erected manner substantially perpendicular to the bottom portion 51a thus allowing the overlapping portion 51b and a distal end portion of the valve element 52 to have a fitting engagement state of a predetermined length in the depth direction of the casing 51.

The guide portion 51c is formed such that an inner diameter of the guide portion 51c is increased as the guide portion 51c c extends away from the seat surface 57, and has a tapered surface 59 for throttling the flow of a refrigerant gas between a distal end portion of the valve element 52 and the tapered surface 59. The cylindrical portion 51d extends in the axial direction of the casing from a portion of the guide portion 51 c where the inner diameter of the guide portion 51c is increased most, and allows the movement of the valve element 52 along the depth direction of the casing 51 (the axial direction).
Further, an engaging recessed portion 60 with which a stopper 54 described later is engaged is formed annularly on an inner wall of the casing in the vicinity of an open end of the casing over the whole circumference.

On the other hand, the valve element 52 is housed in the casing 51, and is slidable in the depth direction (axial direction) of the casing 51. The valve element 52 includes: a valve head portion 52a which is formed on a distal end portion of the valve element 52; a cylindrical shell portion 52b which is formed contiguously with the valve head portion and has a recessed portion 61 for housing the spring 53 therein formed on a back surface thereof; and guide blade portions 52c which are formed on an outer peripheral surface of the shell portion 52b in a projecting manner. A projecting portion 52a1 which projects in the axial direction and a stepped portion 52a2 which is formed on the periphery of the projecting portion 52a1 are formed on the valve head portion 52a. The projecting portion 52a1 has a seat surface 62 which can be brought into contact with the seat surface 57 of the casing 51. The valve hole 58 is opened or closed when the seat surface 62 is brought into contact with or separated from the seat surface 57 of the casing 51. The plurality of guide blade portions 52c are formed on the outer peripheral surface of the shell portion equidistantly (in this embodiment, four guide blade portions 52c being formed at intervals of 90 degrees), and the guide blade portions 52c are brought into slide contact with the inner peripheral surface of the cylindrical portion 51d of the casing 51 in the axial direction so that the valve element 52 is guided smoothly in the axial direction of the casing 51. A space defined between the neighboring guide blade portions forms a passage portion 52d which allows a refrigerant gas flown into the casing 51 from the valve hole 58 to flow toward a downstream side of the valve element 52 therethrough.

In this embodiment, the stopper 54 is formed of a thin-plate-shaped member made of aluminum, a synthetic resin or the like, and the stopper 54 is formed in a tooth lock washer shape. The stopper 54 is constituted of a disc-shaped seat surface portion 54a, and a plurality of pawl portions 54b having resiliency which radially extend from the seat surface portion 54a at equal intervals and are bent in the same direction (toward a side opposite to the valve element) (in this embodiment, six pawl portions 54b being provided at intervals of 60 degrees). The stopper 54 is fixed to the casing 51 in a state where the pawl portions 54b are resiliently deformed by being pushed to the open end portion of the casing 51 from a side of the seat surface portion 54a, and distal ends of the pawl portions 54b are engaged with the engaging recessed portion 60 formed on the inner wall of the casing 51 in the vicinity of the open end of the casing 51 in a hooking manner. Accordingly, in a state where the stopper 54 is fixed to the casing 51, a communication portion 54c which makes an area in front of the stopper 54 and an area behind the stopper 54 communicate with each other is formed by a gap formed between the neighboring pawl portions 54b. Also a gas passage 65 is formed between the valve element 52 and the inner peripheral surface of the casing 51. The gas passage 65 allows a discharge gas to flow through a path ranging from the valve hole 58 formed in the casing 51 to the communication portion 54c of the stopper 54 in a state where the valve element 52 is opened (in a state where the valve head portion 52a of the valve element 52 is lifted so as to be disengaged from the overlapping portion 51 b).

The partition member 56 is integrally formed on the seat surface portion 54a of the stopper 54. The partition member 56 is formed as a cylindrical member having a circular cylindrical shape which has an inner diameter larger than a diameter of the spring 53. A size in the axial direction of the partition member 56 is set substantially equal to or shorter than a size in the axial direction of the recessed portion 61 formed on the valve element 52. An outer diameter of the partition member 56 is set slightly smaller than an inner diameter of the recessed portion 61 formed on the valve element 52. In this embodiment, a clearance between an outer peripheral surface of the partition member (cylindrical member) 56 and an inner peripheral surface of the recessed portion 61 formed on the valve element 52 is set to approximately 0.1mm, and the damper chamber 55 is formed by slidably fitting the partition member 56 in the recessed portion 61 formed on the valve element 52.

The spring 53 is housed in the damper chamber 55 in an axially compressed state, and is resiliently interposed between the valve head portion 52a of the valve element 52 and the seat surface portion 54a of the stopper 54. The spring 53 is adjusted so as to push the projecting portion 52a1 of the valve element 52 to the seat surface 57 of the casing 51 with a predetermined set load.

In the above-mentioned constitution, the manner of operation of the check valve 50 is explained below. Assume that a diameter of the valve hole 58 is a1, an area of the valve hole 58 is A1, a diameter of the seat surface 62 of the projecting portion 52a1 formed on the valve head portion 52a of the valve element 52 is a2, an area of the seat surface 62 is A2, a diameter of the valve head portion 52a of the valve element 52 is a3, and an area of the valve head portion 52a is A3.
When the valve is in a closed state, the seat surface 62 of the projecting portion 52a1 of the valve element 52 is brought into contact with the seat surface 57 of the casing 51, and a discharge-chamber-side discharge pressure (Pdc) which is a pressure on a discharge chamber side acts on a portion of the projecting portion 52a1 which closes the valve hole 58. Further, a space 63 is formed between the seat surface 57 of the casing 51 and the stepped portion 52a2 of the valve element 52. An external-cycle-side discharge pressure (Pds) which is a pressure in an external cycle side downstream of the valve element enters the space 63 through the clearance formed between the valve element 52 and the overlapping portion 51b b of the casing 51, and the external-cycle-side discharge pressure (Pds) acts on the stepped portion (area A3-A2) 52a2. Further, there exists a pressure gradient from the discharge-chamber-side discharge pressure (Pdc) to the external-cycle-side discharge pressure (Pds) and hence, a pressure substantially equal to a pressure (Pds+Pdc)/2 acts on a portion of the seat surface 57 outside the valve hole 58 (area: A2-A1). On the other hand, the external-cycle-side discharge pressure (Pds) acts on an upper surface (area A3) of the valve element 52, and the external-cycle-side discharge pressure (Pds) pushes the valve element 52 in the valve closing direction together with a spring load F0 of the spring 53. Accordingly, the check valve 50 is opened under a condition that the relationship of A1 × Pdc + (A2-A1) (Pdc+Pds)/2 + (A3-A2) Pds > A3 × Pds + F0 is established.

Immediately after the valve is opened, the valve element 52 moves away from the seat surface 57 so that the valve hole 58 is brought into an open state. However, the distal end portion (valve head portion 52a) of the valve element 52 is not disengaged from the overlapping portion 51 b. Accordingly, a refrigerant which flows into the check valve 50 through the valve hole 58 merely flows toward a system side through the clearance formed between the valve element 52 and the casing 51 at the overlapping portion 51b. Accordingly, the check valve 50 is held in a substantially non-open state. In such a state, a discharge-chamber-side discharge pressure (Pdc) acts on the projecting portion 52a1 and the stepped portion 52a2 and hence, an area where the discharge-chamber-side discharge pressure (Pdc) acts is enlarged and thereby a valve opening force is increased and overcomes a spring load of the spring 53. Accordingly, the valve element 52 is moved in the direction toward a fully open state.

Fig. 3(b) shows the check valve 50 in a fully open state where the distal end portion of the valve element 52 is disengaged from the overlapping portion 51 b and hence, a refrigerant gas on a discharge chamber side is discharged toward an external cycle side through the gas passage 65 formed in the check valve 50. Since a spring constant K is set smaller than a pressure load, in a normal operation, the check valve 50 is opened to such a fully open state.

At a low flow rate, the difference in pressure (Pdc-Pds) between a pressure in front of the valve element 52 and a pressure behind the valve element 52 is small and hence, there exists a possibility that the valve element 52 cannot be held in a fully open state against a spring load of the spring 53. Here, the guide portion 51c c has a fan-shaped tapered surface and hence, when a lift amount of the valve element 52 becomes smaller, a passage between a distal end portion of the valve element 52 and the guide portion 51c is throttled and thereby the difference in pressure between the pressure in front of the valve element 52 and the pressure behind the valve element 52 is increased. Accordingly, the valve element 52 cannot move below the guide portion 51c due to such pressure difference and hence, a predetermined amount or more of lift of the valve element 52 is supposed to be maintained.

On the other hand, if the damper chamber 55 described above were not formed, when pressure pulsation or a sudden pressure change occurs on a discharge chamber side, a lift amount of the valve element 52 could not be maintained and hence, the distal end portion of the valve element 52 would move below the guide portion 51c and the valve element 52 would be seated on the seat surface 57 thus giving rise to a drawback that the above-mentioned chattering occurs.

To the contrary, by forming the damper chamber 55 between the valve element 52 and the stopper 54 as described above, even when pressure pulsation or a sudden pressure change occurs, the rapid movement of the valve element 52 can be attenuated.
Further, in the above-mentioned constitution, the spring 53 is arranged in the damper chamber 55 and hence, it is unnecessary to arrange the spring 53 in the gas passage 65 formed between the casing 51 and the valve element 52 whereby it is also possible to obviate a drawback that passage resistance is increased due to the spring 53.
Further, the partition member 56 is constituted of the cylindrical member integrally formed with the stopper 54 and hence, the increase of the number of parts can be suppressed and the assembling of the stopper 54 into the casing 51 can be performed easily.

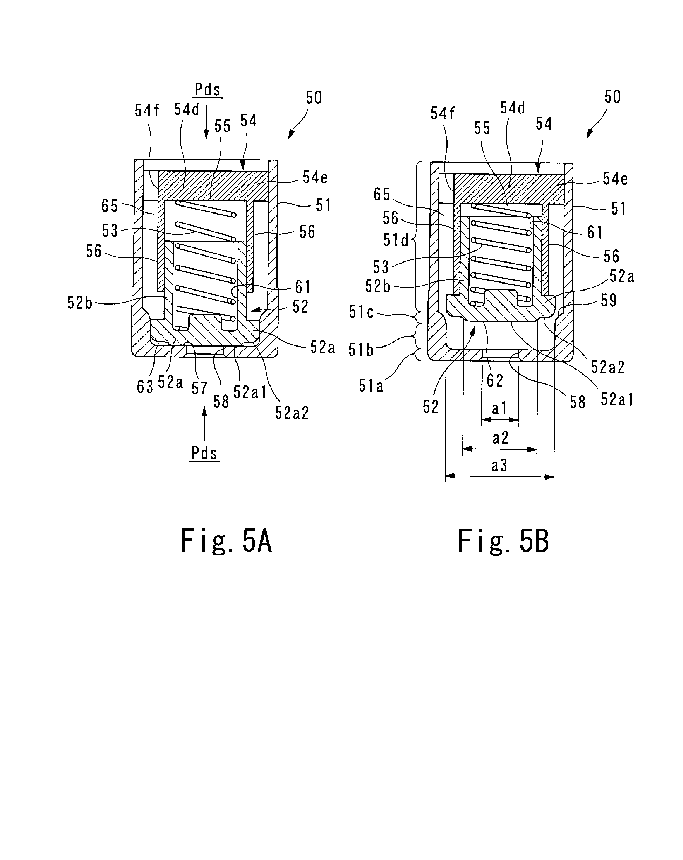

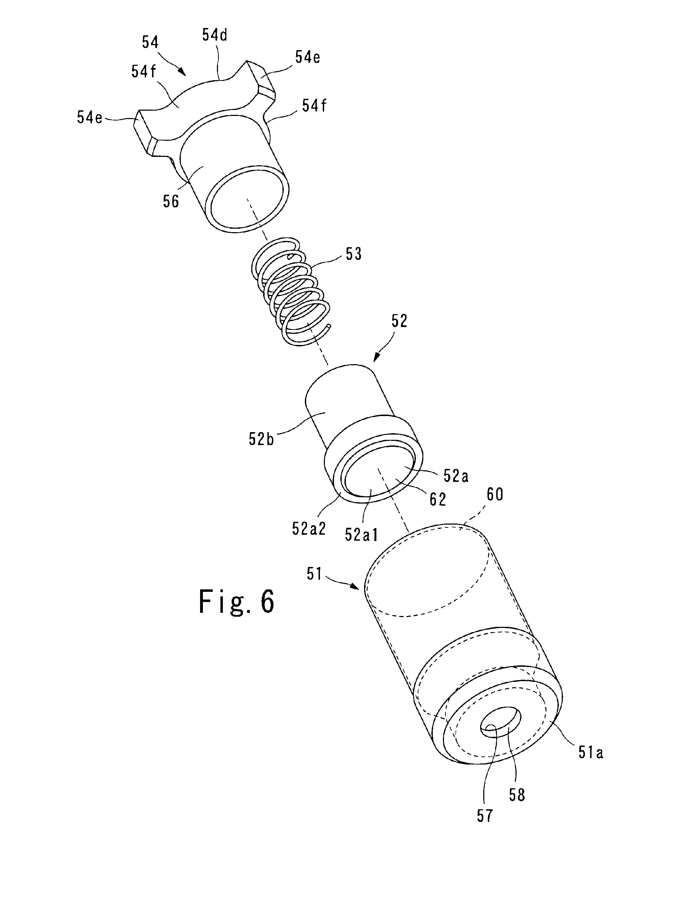

In the above-mentioned constitution, although the explanation has been made with respect to the example where the guide blade portions 52c are formed on the shell portion 52b of the valve element 52 in an outwardly projecting manner for guiding the movement of the valve element 52, and the damper chamber 55 is formed by slidably fitting the partition member (cylindrical member) 56 which is integrally formed with the stopper 54 in the recessed portion 61 formed on the valve element 52. However, as shown in Fig. 5 and Fig. 6, an outer peripheral surface of a shell portion 52b of a valve element 52 may be formed smoothly by removing guide blade portions of the valve element 52, a partition member 56 may be constituted of a cylindrical member which is integrally formed with a stopper 54, and the partition member 56 may be slidably fitted on the shell portion 52b of the valve element 52 thus forming a damper chamber 55 which houses a spring 53 in a compressed state in a space surrounded by an inner side of the partition member 56 and a recessed portion 61 formed on the valve element 52 (second embodiment).

The stopper 54 shown in this embodiment, unlike the stopper 54 of the above-mentioned constitutional example, is not formed in a tooth lock washer shape but is constituted of a columnar-shaped body portion 54d made of a synthetic resin or the like and projecting portions 54e which are formed on the body portion 54d in a radially projecting manner, and a communication portion 54f which makes an area in front of the stopper 54 and an area behind the stopper 54 communicate with each other is formed between the projecting portions 54e arranged adjacent to each other. The stopper 54 is fixed to the casing 51 in such a manner that the stopper 54 is press-fitted into the casing 51 from an opening portion of the casing 51, and the communication portion 54f which is formed on the periphery of the stopper 54 is formed as a portion of a gas passage 65 formed between the valve element 52 and the casing 51.

Due to such a constitution, in addition to the advantageous effects of the first embodiment, this example can acquire the following advantageous effects. That is, the shell portion 52b of the valve element 52 is slidably fitted in the partition member (cylindrical member) 56 and hence, the movement of the valve element 52 in the axial direction is guided by the partition member 56 even when guide blade portions are not formed on the valve element 52 and thereby a large gas passage 65 can be ensured around the partition member 56. Further, in addition to the constitution where no obstacles are present in the gas passage 65, a refrigerant gas which enters the casing 51 through a valve hole 58 and flows toward a downstream side by being routed around a valve head portion also flows in the inside of the casing in symmetry (symmetrically) and is discharged from the communication portion 54f of the stopper 54. Accordingly, passage resistance can be made small.

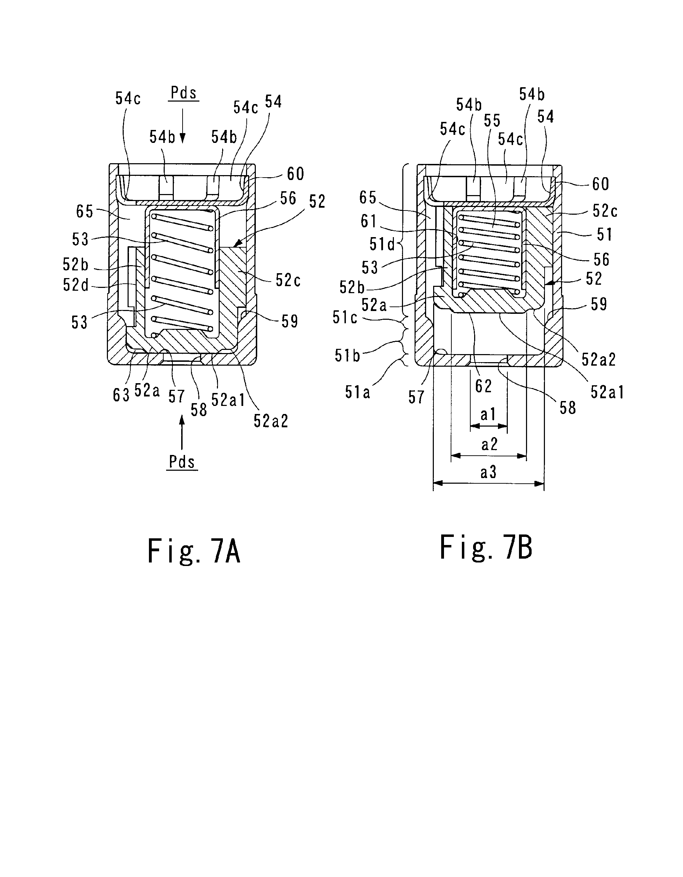

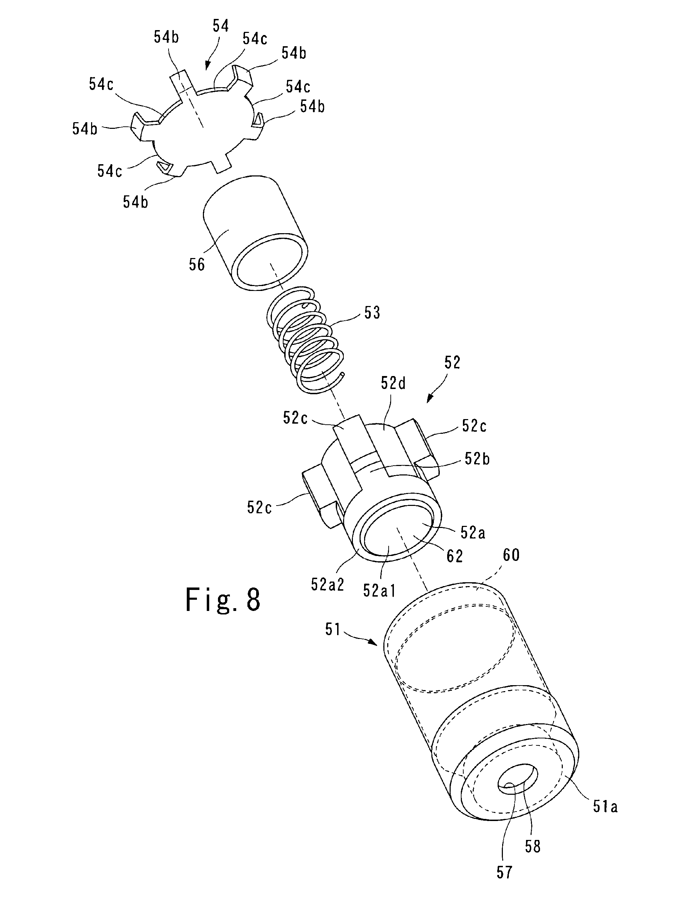

Although the example where the partition member (cylindrical member) 56 is integrally formed with the stopper 54 has been exemplified in the above-mentioned constitutions, as shown in Fig. 7 and Fig. 8, a partition member 56 may be formed of a bottomed cylindrical member made of metal such as aluminum, a synthetic resin or the like, and may be formed as a body separate from the stopper 54 (third embodiment).

The partition member (cylindrical member) 56 is held in a state where the partition member 56 is brought into contact with a seat surface portion 54a of the stopper 54 by a spring 53 which is housed in the inside of the partition member 56. An inner diameter of an opening portion of the partition member 56 is set larger than a diameter of the spring 53, and an outer diameter of the partition member 56 is set slightly smaller than an inner diameter of a recessed portion 61 formed on a valve element 52. By inserting an opening side of the partition member 56 in the recessed portion 61 formed on the valve element 52 in a slidable manner, a damper chamber 55 which houses the spring 53 therein is formed between the stopper 54 and the valve element 52.
The other constitutions of this example are substantially equal to the constitutions of the first embodiment and hence, parts identical with the parts of the first embodiment are given the same symbols and their explanation is omitted in this embodiment.

Due to such a constitution, in addition to the advantageous effects acquired by the first embodiment, the following advantageous effects can be acquired. That is, even when the valve element 52 is displaced or inclined from an axis of a casing 51 caused by clearance formed between the valve element 52 and the partition member (cylindrical member) 56, the partition member 56 is formed as a body separate from the stopper 54 and hence, the partition member 56 can absorb such displacement or inclination. Accordingly, the strict centering of the valve element 52 with the stopper 54 becomes unnecessary and hence, the strict assembling accuracy of the check valve 50 becomes unnecessary.

### [Reference Signs List]

- 4:: crank chamber
- 7:: shaft
- 15:: cylinder bore
- 16:: piston
- 20:: swash plate
- 23:: compression chamber
- 33:: suction chamber
- 34:: discharge chamber
- 45:: discharge passage
- 50:: check valve
- 51:: casing
- 51a:: bottom portion
- 51b:: overlapping portion
- 52:: valve element
- 52a:: valve head portion
- 52b:: shell portion
- 52c:: guide blade portion
- 53:: spring
- 54:: stopper
- 54c, 54f:: communication portion
- 55:: damper chamber
- 56:: partition member
- 58:: valve hole
- 61:: recessed portion
- 65:: gas passage

## Claims

1. Check valve which is provided to a discharge passage through which a working fluid discharged into a discharge chamber of a compressor is delivered to the outside of the compressor, and has a valve close pressure thereof set smaller than a valve open pressure thereof, the check valve comprising:
- a bottomed cylindrical casing having a bottom portion in which a valve hole is formed;
- a valve element which is movable in the inside of the casing along the depth direction of the casing and opens or closes the valve hole;
- a spring which biases the valve element toward the bottom portion; and
- a stopper which restricts the movement of the valve element and has a communication portion formed therein,
wherein
- a gas passage is formed between the valve element and an inner peripheral surface of the casing from the valve hole to the communication portion, and
- a damper chamber is formed between the valve element and the stopper by a partition member which is slidably fitted in the valve element.

2. Check valve according to claim 1, wherein the spring is housed in the damper chamber.

3. Check valve according to claim 1 or 2, wherein the partition member is formed of a cylindrical member which is integrally formed with the stopper.

4. Check valve according to claim 1 or 2, wherein the partition member is formed of a bottomed cylindrical member formed as a body separate from the stopper.

5. Check valve according to claim 3 or 4, wherein
the valve element comprises: a valve head portion which opens or closes the valve hole;
- a shell portion which is formed contiguously with the valve head portion and has a recessed portion formed on a back surface thereof; and
- guide blade portions which are formed on an outer peripheral surface of the shell portion in a projecting manner and are brought into slide contact with an inner peripheral surface of the casing, wherein an opening side of the partition member is slidably fitted in the recessed portion formed on the shell portion thus forming the damper chamber.

6. Check valve according to claim 3, wherein the valve element comprises: a valve head portion which opens or closes the valve hole; and a shell portion which is formed contiguously with the valve head portion and has a recessed portion formed on a back surface thereof; wherein an opening side of the partition member is slidably fitted on the shell portion such that the opening side covers the recessed portion thus forming the damper chamber.

7. Swash-plate variable capacity compressor provided with the check valve according to any one of claims 1 to 6, the variable capacity compressor comprising:
- a shaft which passes through a crank chamber and is rotatably supported on a housing;
- a swash plate which is rotatable in synchronism with the rotation of the shaft and is mounted on the shaft in an inclinable manner with respect to the shaft;
- a piston which is engaged with a periphery of the swash plate and is slidable in a reciprocating manner in the inside of a cylinder bore formed in the housing along with the rotation of the swash plate; and
- a suction chamber and a discharge chamber which are selectively communicated with the cylinder bore by the reciprocating slide movement of the piston,
wherein
- a discharge capacity is variably controlled by changing an inclination angle of the swash plate.
